# EUROPÄISCHE PATENTSCHRIFT

(11) **EP 2 807 398 B1**
(45) Veröffentlichungstag und Bekanntmachung des Hinweises auf die Patenterteilung: **10.01.2018**
(21) Anmeldenummer: 13700915.5
(22) Anmeldetag: 23.01.2013
(51) Int. Cl.: F16F 9/54

(54) **LÄNGENVERÄNDERBARES AGGREGAT**
ADJUSTABLE-LENGTH ASSEMBLY
ENSEMBLE RÉGLABLE EN LONGUEUR

(30) Priorität: 27.01.2012 DE 102012201174
(43) Veröffentlichungstag der Anmeldung: 03.12.2014
(73) Patentinhaber: Stabilus GmbH, 56070 Koblenz (DE)
(72) Erfinder: BOCHEN, Jan, 56337 Eitelborn (DE); WOLF, Jörg, 56220 Urmitz (DE); THEIS, Christof, 56204 Hillscheid (DE); LANGE, Danniel, 500127 Brasov (RO)
(74) Vertreter: Weickmann & Weickmann PartmbB
(86) Internationale Anmeldenummer: PCT/EP2013/051201
(87) Internationale Veröffentlichungsnummer: WO 2013/110636

(56) Entgegenhaltungen:
- EP-A1- 1 460 288
- DE-A1- 10 046 961
- GB-A- 2 064 640
- JP-U- H09 146

## Beschreibung

Die Erfindung betrifft ein längenveränderbares Aggregat, umfassend ein rohrförmiges äußeres Bauteil mit einer Längsachse, ein in dem äußeren Bauteil entlang dessen Längsachse verschiebbar geführtes inneres Bauteil, das an einem Austrittsende des äußeren Bauteils aus diesem heraustritt und an seinem außerhalb des äußeren Bauteils angeordneten Ende ein Anschlusselement aufweist, und ein weiteres Anschlusselement, das an dem dem Austrittsende entgegengesetzten Montageende des äußeren Bauteils angeordnet ist.

Derartige längenveränderbare Aggregate sind aus dem Stand der Technik, zum Beispiel aus der DE 100 46 961 A1, allgemein bekannt, insbesondere aus dem Kraftfahrzeugbereich. So kommen längenveränderbare Aggregate beispielsweise in Form von Gasfedern bzw. elektromechanischen Stellantrieben zum Unterstützen bzw. Herbeiführen von Schwenkbewegungen von Klappen von Kraftfahrzeugen, insbesondere Heckklappen, Kofferraumdeckeln, Motorhauben, Türen und dergleichen mehr, zum Einsatz. Dabei ist das längenveränderbare Aggregat über ein erstes Anschlusselement, nämlich dem einen Anschlusselement oder dem weiteren Anschlusselement, mit der Karosserie des Fahrzeugs verbunden, während es über ein zweites Anschlusselement, nämlich das weitere Anschlusselement oder das eine Anschlusselement, mit der Kraftfahrzeugklappe verbunden ist. Wenigstens eines der Anschlusselemente kann dabei eine Kugelpfanne umfassen, die zum Zusammenwirken mit einer Kugel bestimmt ist, welche an einer übergeordneten Baugruppe angeordnet ist, beispielsweise der Klappe oder der Karosserie des Fahrzeugs. Grundsätzlich ist es jedoch auch möglich, dass das längenveränderbare Aggregat an wenigstens einem seiner Enden mittels einer Öse ausgebildet ist, welche von einem Bolzen oder Stift der übergeordneten Baugruppe durchsetzt ist, oder einem Stift oder Bolzen, der in eine ihm zugeordnete Ausnehmung der übergeordneten Baugruppe eingreift, an der übergeordneten Baugruppe festlegbar ist.

Der Erfindung liegt das Problem zugrunde, dass die Anschlusselemente je nach Einbausituation unterschiedlich orientiert sein müssen, wobei insbesondere bei Stellantrieben die Orientierung der die elektrische Energie zuführenden Versorgungskabel als weitere zu beachtende Randbedingung hinzukommt.

Es ist daher Aufgabe der Erfindung ein längenveränderbares Aggregat der eingangs genannten Art derart weiterzubilden, dass es ohne Weiteres an die jeweils vorliegende Einbausituation angepasst werden kann.

Diese Aufgabe wird durch ein längenveränderbares Aggregat mit den Merkmalen des Anspruchs 1 gelöst.

Festzuhalten ist in diesem Zusammenhang, dass die 360°-Ringschulter nicht notwendigerweise eine orthogonal zur Längsachse verlaufende Oberfläche aufzuweisen braucht, auch wenn sich dies vorteilhaft auf die Effektivität der Kraftübertragung auswirkt.

Festzuhalten ist ferner, dass die Ringschulter nicht notwendigerweise unmittelbar an dem weiteren Anschlusselement ausgebildet zu sein braucht. Vielmehr kann die auch an einem mit dem weiteren Anschlusselement betriebsfest verbundenen Hilfselement ausgebildet sein. Auch das wenigstens eine Eingriffselement kann einem mit dem weiteren Anschlusselement betriebsfest verbundenen Hilfselement zugeordnet sein. Das Hilfselement kann dabei beispielsweise aus Metall gefertigt sein, beispielsweise aus Messing und mit dem weiteren Anschlusselement, das vorzugsweise aus Kunststoff gefertigt ist, mittels direktem Umspritzen, Verschweißen oder Warmeinbetten verbunden sein.

Ist mehr als eine derartige 360°-Ringschulter vorhanden, die mit einer entsprechenden Mehrzahl von Eingriffselementen zusammenwirkt, so können Zugkräfte in besonders effektiver Weise übertragen werden. In Übereinstimmung mit dem allgemeinen Sprachgebrauch werden im Zusammenhang mit der vorliegenden Erfindung Kräfte, die das längenveränderbare Aggregat zu verlängern suchen, als Zugkräfte bezeichnet, während Druckkräfte Kräfte sind, die das längenveränderbare Aggregat zu verkürzen suchen.

Gemäß einer ersten Ausführungsvariante kann das wenigstens eine Eingriffselement mit dem Aufsatz einstückig ausgebildet sein. Hierdurch kann die Anzahl der das Aggregat bildenden Komponenten reduziert werden, was seinen Aufbau vereinfacht.

Der Ringvorsprung und ein an diesen angrenzender Längenabschnitt eines mit dem Ringvorsprung einstückig ausgebildeten, sich in Richtung der Längsachse erstreckenden Schafts können in einer korrespondierend ausgebildeten Ausnehmung aufgenommen sein. Umfasst die Ausnehmung eine Umfangsnut, in welcher der Ringvorsprung aufgenommen ist, so bildet zum einen eine der axialen Begrenzungsflächen die sich über volle 360° erstreckende Ringschulter. Zum anderen stellen die beiden axialen Begrenzungsflächen der Umfangsnut im Zusammenwirken mit dem Ringvorsprung einen axialen Formschluss bereit, der sowohl Zugkräfte als auch Druckkräfte zu übertragen vermag.

Dabei kann die korrespondierend ausgebildete Ausnehmung gemäß einer Ausführungsform durch Einbetten des Ringvorsprungs und des Schafts in das Kunststoffmaterial des weiteren Anschlusselements hergestellt sein, vorzugsweise durch Umspritzen des Ringvorsprungs und des Schafts mit dem Kunststoffmaterial des weiteren Anschlusselements. Durch das Einbetten, insbesondere durch das Umspritzen, des Ringvorsprungs kann ein Axialspiel des Ringvorsprungs in der korrespondierend ausgebildeten Ausnehmung in einfacher Weise minimiert, wenn nicht gar vollständig ausgeschlossen, werden. Zur Erleichterung der Fertigung kann das mit dem Montageende des äußeren Bauteils starr verbundene Zwischenelement ferner zweiteilig ausgebildet sein, nämlich mit einem Basisteil, das mit dem Montageende des äußeren Bauteils starr verbunden ist und einem Aufsatzteil, das den Ringvorsprung aufweist und seinerseits mit dem Basisteil starr verbindbar ist.

Wie vorstehend bereits erwähnt, kann das längenveränderbare Aggregat in Weiterbildung der Erfindung ein Kolben-Zylinder-Aggregat sein, dessen äußeres Bauteil von einem mit Fluid gefüllten Arbeitszylinder gebildet ist, und dessen inneres Bauteil von einer Kolbenstange gebildet ist, die an ihrem in dem Arbeitszylinder angeordneten Ende einen Kolben aufweist, welcher den Innenraum des Arbeitszylinders in einen ersten Arbeitsraum und einen zweiten Arbeitsraum unterteilt, und die an dem Austrittsende des Arbeitszylinders abgedichtet aus diesem herausgeführt ist und an ihrem außerhalb des Arbeitszylinders angeordneten Ende das eine Anschlusselement aufweist.

Alternativ ist es jedoch auch möglich, dass das längenveränderbares Aggregat ein elektromechanisches Antriebsaggregat ist, dessen äußeres Bauteil von einem Außenrohr gebildet ist, und dessen inneres Bauteil von einem Innenrohr gebildet ist, wobei in dem von Außenrohr und Innenrohr umschlossenen Raum eine elektromechanische Stellvorrichtung angeordnet ist, die einenends mit dem Außenrohr und andernends mit dem Innenrohr verbunden ist.

Ferner wurde bereits erwähnt, dass das eine Anschlusselement oder/und das andere Anschlusselement eine Kugelpfanne umfassen kann.

Die Erfindung wird im Folgenden anhand der beigefügten Zeichnung an Ausführungsbeispielen näher erläutert werden. Es stellt dar:
- Figur 1: einen ersten Typ von längenveränderbarem Aggregat, bei dem die Erfindung eingesetzt werden kann, nämlich ein elektromechanisches Antriebsaggregat;
- Figur 2: einen weiteren Typ von längenveränderbarem Aggregat, bei dem die Erfindung eingesetzt werden kann, nämlich ein Kolben-Zylinder-Aggregat, insbesondere eine Gasfeder; und
- Figuren 3 bis 8: verschiedene Ausführungsformen von Anschlusselementen, die bei den Aggregaten der Figuren 1 und 2 eingesetzt werden können, wobei Figur 3 ein erfindungsgemäßes Anschlusselement darstellt.

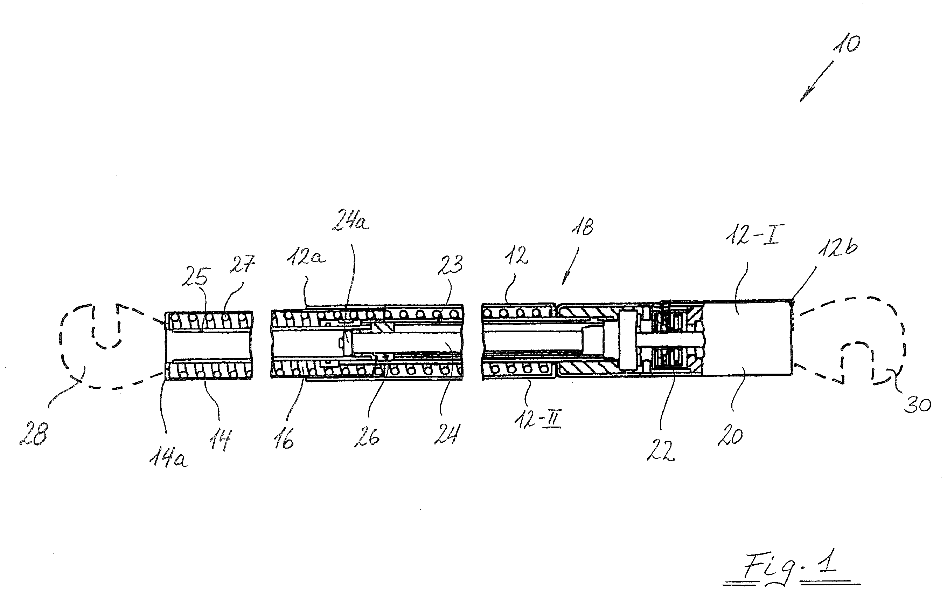

In Figur 1 ist ein als elektromechanisches Antriebsaggregat ausgebildetes längenveränderbares Aggregat allgemein mit 10 bezeichnet.

Das Aggregat 10 umfasst ein äußeres Bauteil, das von einem Außenrohr 12 mit einer Längsachse A gebildet ist, und ein in dem Außenrohr 12 entlang der Längsachse A verschiebbar geführtes inneres Bauteil, das von einem Innenrohr 14 gebildet ist. An einem in Figur 1 linken Austrittsende 12a des Außenrohrs 12 tritt das Innenrohr 14 aus dem Außenrohr 12 heraus. In dem vom Außenrohr 12 und Innenrohr 14 umschlossenen Raum 16 ist eine elektromechanische Stellvorrichtung 18 angeordnet, die einen Elektromotor 20, ein Getriebe 22, eine Gewindespindel 24 und eine mit der Gewindespindel 24 in Gewindeeingriff stehende Spindelmutter 26 umfasst. Die Gewindemutter 26 ist über ein Führungsrohr 25 mit dem in Figur 1 linken Ende des Innenrohrs 14 verbunden und dient zur Führung des freien Endes 24a der Gewindespindel 24. Die Gewindemutter 26 ist ihrerseits in einem weiteren Führungsrohr 23 geführt, das innerhalb des Außenrohrs 12 die Gewindespindel 24 umgebend angeordnet ist. In dem einerseits zwischen dem Außenrohr 12 und dem weiteren Führungsrohr 23 und andererseits zwischen dem Innenrohr 14 und dem einen Führungsrohr 25 gebildeten Raum ist eine Schraubendurckfeder 27 aufgenommen, welche ein etwaig vorhandenes Spiel des Gewindeeingriffs zwischen Gewindespindel 24 und Gewindemutter 26 ausschließt.

In dem in Figur 1 dargestellten Ausführungsbeispiel ist das Außenrohr 12 zweiteilig ausgebildet, nämlich mit einem ersten Teil 12-I, in dem der Elektromotor 20 und das Getriebe 22 angeordnet sind, und einem zweiten Teil 12-II, in dem die Gewindespindel 24 aufgenommen ist und in dem sich ferner das Innenrohr 14 verschieben kann. Es ist jedoch ebenso möglich, das Aggregat 10 mit einem einstückigen Außenrohr auszubilden. Die Spindelmutter 26 ist mit dem Innenrohr 14 über das Führungsrohr 25 fest verbunden, so dass eine aus der Drehung der Gewindespindel 24 und dem Gewindeeingriff von Gewindespindel 24 und Spindelmutter 26 herrührende axiale Verlagerungsbewegung der Spindelmutter 26 zu einer Verschiebebewegung des Innenrohrs 14 relativ zum Außenrohr 12 führt.

Am freien Ende 14a des Innenrohrs 14 ist ein erstes Anschlusselement 28 angeordnet, und an dem dem Austrittsende 12a des Außenrohrs 12 entgegengesetzten Montageende 12b ist ein zweites Anschlusselement 30 angeordnet. In dem dargestellten Ausführungsbeispiel sind beide Anschlusselemente 28, 30 als Kugelpfannen ausgebildet, die zur Verbindung mit einem Kugelkörper bestimmt sind, der an einer übergeordneten Baugruppe angebracht ist, beispielsweise einer Karosserie oder einer durch das elektromechanische Antriebsaggregat zu verstellende Klappe eines Kraftfahrzeugs. Die Anschlusselemente 28, 30 brauchen aber nicht notwendigerweise als Kugelpfanne ausgebildet zu sein, sondern können grundsätzlich auch von einer Öse gebildet sein, welche von einem Bolzen oder einem Stift der übergeordneten Baugruppe durchsetzt wird, oder von einem Stift oder einem Bolzen, der in eine ihm zugeordnete Ausnehmung der übergeordneten Baugruppe eingreift.

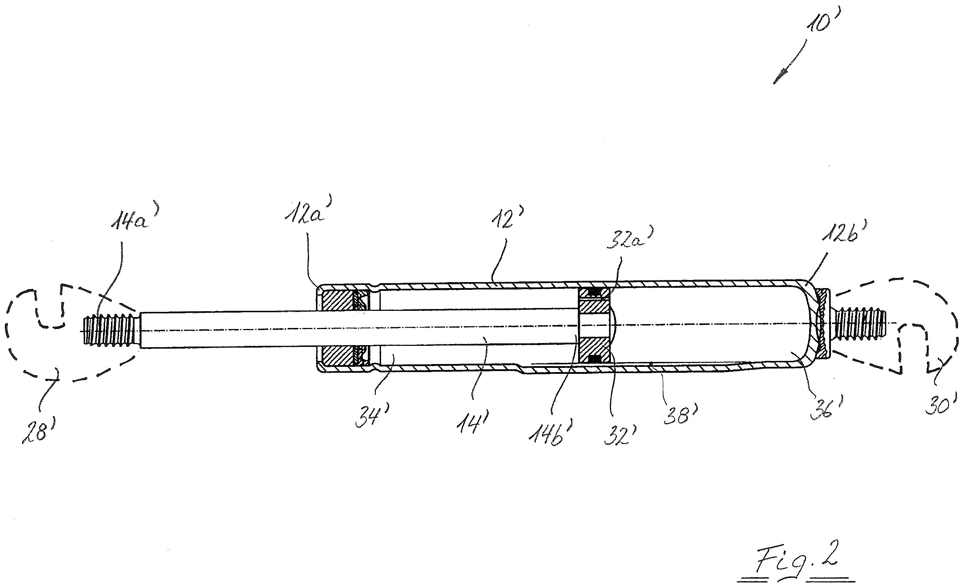

In Figur 2 ist ein zweiter Typ von längenveränderbarem Aggregat dargestellt, nämlich ein Kolben-Zylinder-Aggregat 10', insbesondere eine Gasfeder.

In diesem Fall ist das äußere Bauteil von einem mit unter Druck stehendem Fluid gefüllten Arbeitszylinder 12' gebildet, während das innere Bauteil von einer Kolbenstange 14' gebildet ist, welche an einem Austrittsende 12a' des Arbeitszylinders 12' dichtend aus diesem herausgeführt ist. An ihrem im Arbeitszylinder 12' angeordneten Ende 14b' trägt die Kolbenstange 14' einen Kolben 32', der den Innenraum des Arbeitszylinders 12' in zwei Arbeitsräume 34', 36' unterteilt. Die beiden Arbeitsräume 34', 36' sind zum einen durch ein im Kolben 32' angeordnetes Drosselventil 32a' miteinander verbunden und zum anderen über einen Bypass 38', der in dem dargestellten Ausführungsbeispiel aber nur auf einem Teil des gesamten möglichen Verstellwegs des Kolbens 32' im Arbeitszylinder 12' wirksam ist. Aufgrund der unterschiedlichen Beaufschlagungsflächen, die der Arbeitskolben 32' den beiden Arbeitsräumen 34', 36' darbietet, erzeugt das unter Druck stehende Fluid auf den Arbeitskolben 32' eine diesen in Figur 2 nach links drängende Kraft.

An ihrem freien Ende 14a' trägt die Kolbenstange 14' ein erstes Anschlusselement 28' und an seinem freien Ende 12' trägt der Arbeitszylinder 12' ein zweites Anschlusselement 30'. Bezüglich der Ausbildung dieser Anschlusselemente 28', 30' gilt das vorstehend zur Ausbildung der Anschlusselemente 28, 30 Gesagte in identischer Weise.

Jedes der Anschlusselemente 28, 30, 28', 30' kann erfindungsgemäß derart ausgebildet sein, dass es relativ zu dem es tragenden Ende 12b, 14a, 12b', 14a' des Aggregats 10, 10' um die Achse A frei verdrehbar ist.

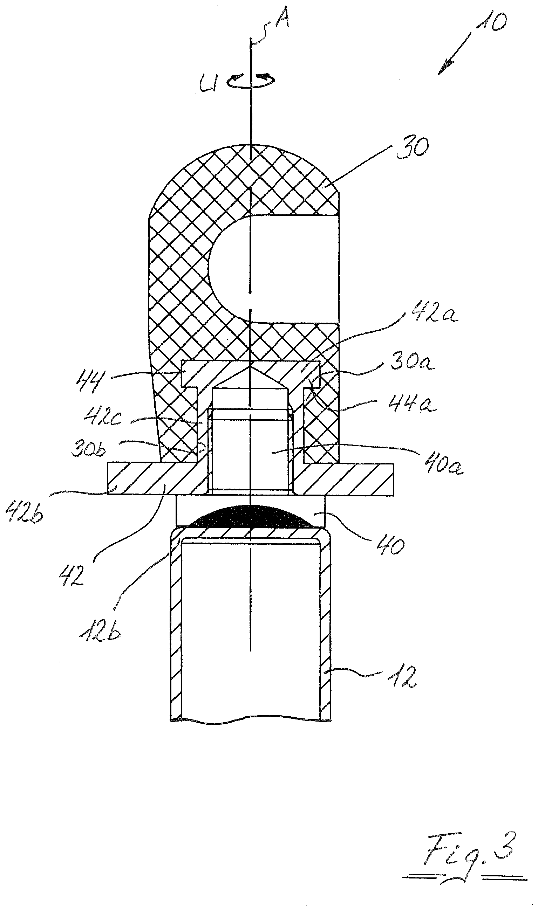

Mit Bezug auf die Figuren 3 bis 8 werden im Folgenden Beispiele der Anschlusselemente 28, 30, 28', 30' erläutert werden, wobei dies der Einfachheit halber lediglich am Beispiel des Anschlusselements 30 erfolgen wird. Die hierzu getroffenen Aussagen gelten aber in identischer Weise auch für die Anschlusselemente 28, 28' und 30'.

Bei der in Figur 3 dargestellten Ausführungsform ist an das Ende des Rohrs 12 ein Element 40 angeschweißt, das einen Gewindebolzen 40a trägt. In diesem Zusammenhang sei darauf hingewiesen, dass der Gewindebolzen 40a beispielsweise auch unmittelbar am freien Ende der Kolbenstange 14' des in Figur 2 dargestellten längenveränderbaren Aggregats 10' ausgebildet sein kann.

Auf den Gewindebolzen 40a wird ein im Wesentlichen hutförmig ausgebildeter Aufsatz 42 aufgeschraubt, der an seinem oberen Ende 42a ein als Ringvorsprung 44 ausgebildetes Eingriffselement aufweist. Die Hutkrempe 42b des Aufsatzes 42 ist in dem dargestellten Ausführungsbeispiel weit auskragend ausgebildet und kann beispielsweise zum Abstützen einer das Rohr 12 umgebenden Feder dienen. Das obere Ende 42a und die Hutkrempe 42b sind durch einen Schaftabschnitt 42c miteinander verbunden. Das den Gewindebolzen 42a tragende Element 40 und der Aufsatz 42 bilden zusammen ein Zwischenelement im Sinne der Ansprüche. Zugkräfte, welche das Anschlusselement 30 vom Aufsatz 42 abzuheben versuchen, werden durch das Zusammenwirken einer Ringfläche 30a des Anschlusselements 30 mit einer Gegenringfläche 44a des Ringvorsprungs 44 aufgenommen.

Der Schaftabschnitt 42c und der Ringvorsprung 44 sind in einer Ausnehmung 30b des Anschlusselements 30 aufgenommen, die dadurch gebildet wird, dass man den hutförmigen Aufsatz 42 in eine Spritzgussform einlegt und dort mit Kunststoff umspritzt. Durch geeignete Maßnahmen, beispielsweise geeignete Auswahl des Kunststoffs, eine Beschichtung der Außenfläche des Aufsatzes 42, geeignete Kühlung und dergleichen mehr kann dabei sichergestellt werden, dass der Kunststoff der Kugelpfanne 30 den hutförmigen Aufsatz 42 und insbesondere den Ringvorsprung 44 zum einen spielfrei formschlüssig umgibt und zum anderen relativ zu diesem um die Achse A frei verdrehbar ist.

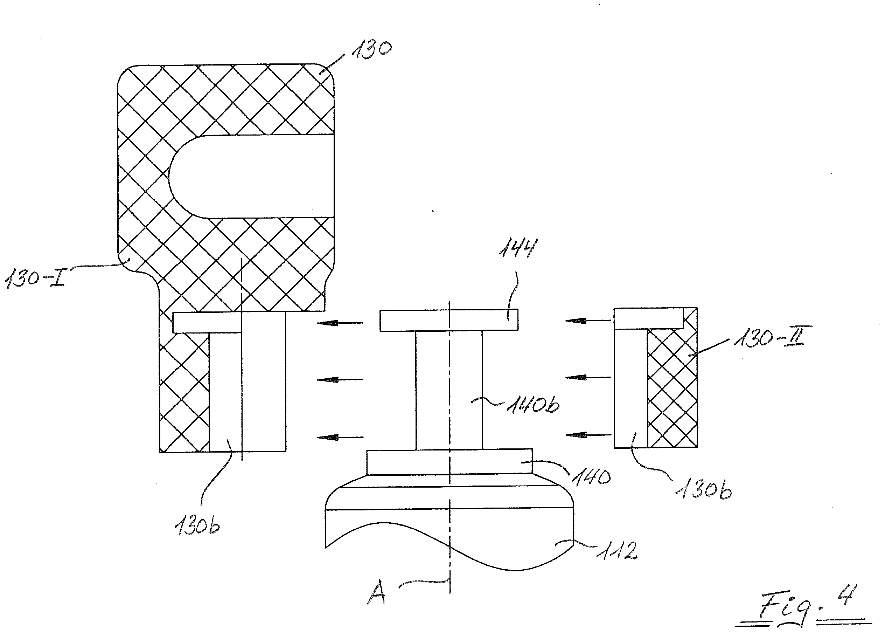

Obgleich im Zusammenhang mit der vorliegenden Erfindung grundsätzlich eine Verdrehbarkeit um 360° ausreicht, ist es unabhängig von dem vorstehend beschriebenen spezifischen Ausführungsbeispiel der Figur 3, sowie auch der nachfolgend noch zu beschreibenden Figuren 4 bis 8, vorteilhaft, wenn der Aufsatz 42 und die Ausnehmung 30b vollständig rotationssymmetrisch ausgebildet sind, so dass das Anschlusselement 30 relativ zum Außenrohr 12 vollständig frei verdrehbar ist.

In Figur 4 ist ein Beispiel dargestellt, welches im Wesentlichen der Ausführungsform gemäß Figur 3 entspricht. Analoge Teile sind daher in Figur 4 mit den gleichen Bezugszeichen versehen wie in Figur 3, jedoch vermehrt um die Zahl 100. Darüber hinaus wird Figur 4 im Folgenden nur insoweit beschrieben werden, als sie sich von der Ausführungsform gemäß Figur 3 unterscheidet, auf deren Beschreibung hiermit ansonsten ausdrücklich verwiesen sei.

Auch bei dem in Figur 4 dargestellten Anschlusselement ist ein als Ringvorsprung 144 dargestelltes Eingriffselement vorgesehen, allerdings ist dieses unmittelbar an dem mit dem Rohr 112 verschweißten Element 140 ausgebildet. Ferner ist die Kugelpfanne 130 zweiteilig ausgebildet. Ein Hauptteil 130-I, der die eigentliche Kugelpfannenausnehmung umfasst, ist mit einer seitlich offenen Aufnahme 130b für den Schaft 140b des Elements 140 und den Ringvorsprung 144 ausgebildet. Ferner ist ein Nebenteil 130-II vorgesehen, das mit dem Hauptteil 130-I fest verbindbar ist und einen Deckel für die Aufnahme 130b bildet, so dass das Element 140 und insbesondere der Ringvorsprung 144 von Hauptteil 130-I und Nebenteil 130-II spielfrei formschlüssig und relativ zu diesem frei verdrehbar umgriffen wird.

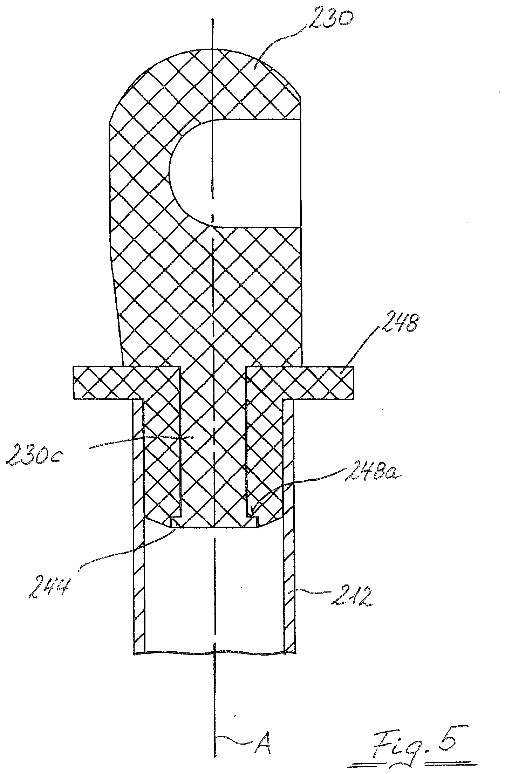

In Figur 5 ist ein weiteres Beispiel dargestellt, welches im Wesentlichen der Ausführungsform gemäß Figur 3 entspricht. Analoge Teile sind daher in Figur 5 mit den gleichen Bezugszeichen versehen wie in Figur 3, jedoch vermehrt um die Zahl 200. Darüber hinaus wird Figur 5 im Folgenden nur insoweit beschrieben werden, als sie sich von der Ausführungsform gemäß Figur 3 unterscheidet, auf deren Beschreibung hiermit ansonsten ausdrücklich verwiesen sei.

Bei dem Anschlusselement gemäß Figur 5 ist der Ringvorsprung 244 am Kugelpfannenkörper 230 ausgebildet, wobei ein Schaft 230c, der den Kugelpfannenkörper 230 mit dem Ringvorsprung 244 verbinden wird, von einer Aufnahmeeinheit 248 spielfrei, formschlüssig und relativ verdrehbar aufgenommen wird, der zur Verbindung des Kugelpfannenelements 230 mit dem Rohr 212 dient. Dabei kann die Aufnahmeeinheit 248 beispielsweise zweiteilig ausgebildet werden, beispielsweise als zwei Halbschalen, die gemeinsam den Schaft 230c umgreifen. Die Ringschulter wird in dieser Ausführungsform von einer Ringfläche 248a der Aufnahmeeinheit 248 gebildet.

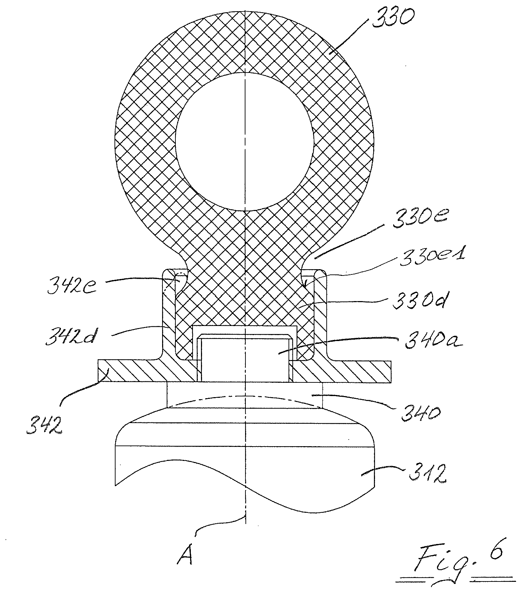

In Figur 6 ist ein weiteres Beispiel dargestellt, welches im Wesentlichen der Ausführungsform gemäß Figur 3 entspricht. Analoge Teile sind daher in Figur 6 mit den gleichen Bezugszeichen versehen wie in Figur 3, jedoch vermehrt um die Zahl 300. Darüber hinaus wird Figur 6 im Folgenden nur insoweit beschrieben werden, als sie sich von der Ausführungsform gemäß Figur 3 unterscheidet, auf deren Beschreibung hiermit ansonsten ausdrücklich verwiesen sei.

Ähnlich wie bei der Ausführungsform gemäß Figur 1 ist auch bei Figur 6 ein Element 340 mit dem Ende des Rohrs 312 verschweißt. Das Element 340 trägt einen Schraubbolzen 340a, auf den ein Aufsatz 342 aufgeschraubt werden kann. Der Aufsatz 342 ist mit einem zylinderförmigen Ansatz 342d ausgebildet. In den von diesem zylinderförmigen Ansatz 342d umgrenzten Raum kann ein Fußende 330d des Anschlusselements 330 eingesetzt werden, das dem oberen Rand des zylinderförmigen Ansatzes 342d benachbart wenigstens eine, vorzugsweise vollständig umlaufende Vertiefung 330e aufweist. In diese Vertiefung kann der obere Rand 342e des zylinderförmigen Ansatzes 342d eingedrückt werden, um das Anschlusselement 330 formschlüssig, spielfrei und relativ verdrehbar aufzunehmen. Die Ringschulter wird in dieser Ausführungsform von einem Oberflächenabschnitt 330e1 der Vertiefung 330e gebildet.

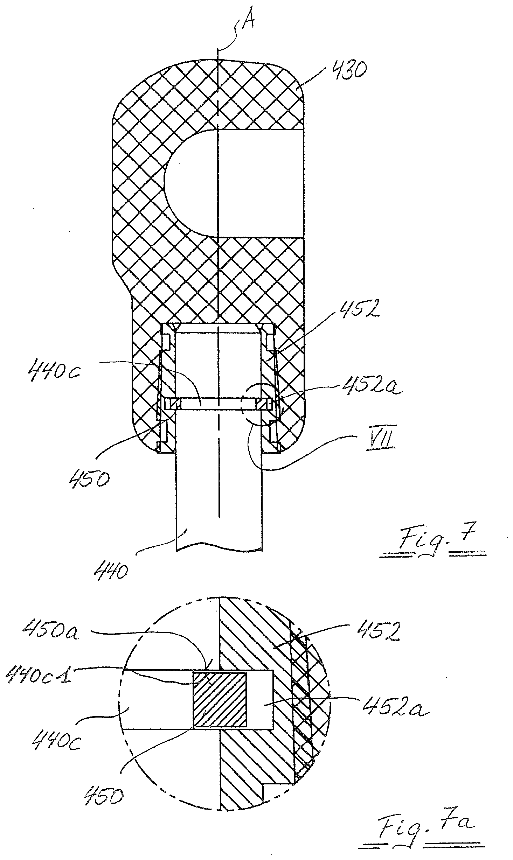

In Figur 7 ist ein weiteres Beispiel dargestellt, welches im Wesentlichen der Ausführungsform gemäß Figur 3 entspricht. Analoge Teile sind daher in Figur 7 mit den gleichen Bezugszeichen versehen wie in Figur 3, jedoch vermehrt um die Zahl 400. Darüber hinaus wird Figur 7 im Folgenden nur insoweit beschrieben werden, als sie sich von der Ausführungsform gemäß Figur 3 unterscheidet, auf deren Beschreibung hiermit ansonsten ausdrücklich verwiesen sei. Das mit VII bezeichnete Detail ist in Figur 7a vergrößert dargestellt

Bei Figur 7 ist das Eingriffselement von einem Sprengring 450 gebildet. Dieser Sprengring 450 greift radial außen in eine innere Umfangsnut 452a einer Hülse 452 ein, die vorzugsweise aus Metalle, beispielsweise Messing gebildet und mit dem Anschlusselement 430 betriebsfest verbunden ist. Diese Hülse 452 bildet ein Hilfselement im Sinne der vorliegenden Erfindung. Radial innen greift der Sprengring 450 in eine äußere Umfangsnut 440c des mit dem (in Figur 7 nicht dargestellten) Rohr verbundenen Elements 440 ein. Der Sprengring 450 ist im dargestellten Ausführungsbeispiel dem Anschlusselement 430 zugeordnet, da er sich in seinem aufgeweiteten Zustand vollständig in die Umfangsnut 452a einlegen und somit den Schaft des Elements 440 passieren lassen kann. Eine obere Ringfläche 450a des Sprengrings 450 wirkt mit einer Gegenringfläche 440c1 der Umfangsnut 440c zusammen, wobei letztere die Ringschulter im Sinne der vorliegenden Erfindung bildet.

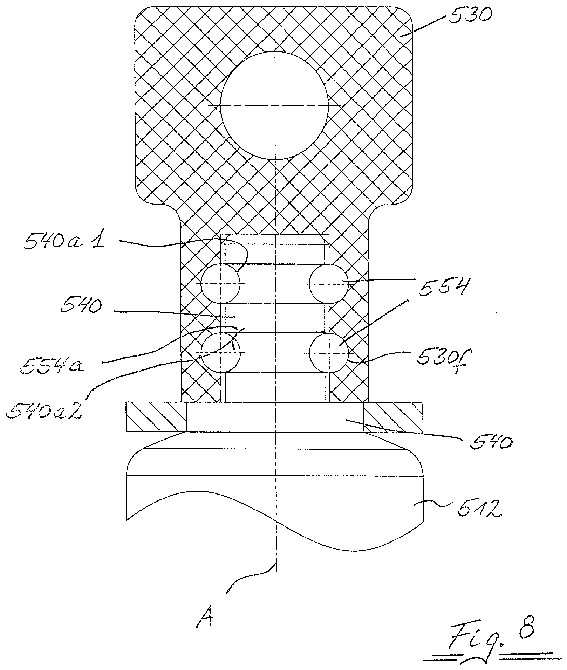

In Figur 8 ist ein weiteres Beispiel dargestellt, welches im Wesentlichen Figur 7 entspricht. Analoge Teile sind daher in Figur 8 mit den gleichen Bezugszeichen versehen wie in Figur 7, jedoch vermehrt um die Zahl 100, d.h. verglichen mit Figur 3 vermehrt um die Zahl 500. Darüber hinaus wird die Ausführungsform gemäß Figur 8 im Folgenden nur insoweit beschrieben werden, als sie sich von Figur 7 unterscheidet, auf deren Beschreibung hiermit ansonsten ausdrücklich verwiesen sei.

Im Unterschied zu Figur 7 kommt bei Figur 8 kein Sprengring als Eingriffselement zum Einsatz, sondern eine Mehrzahl von Stiften 554. Die Stifte 554 werden nach dem Aufstecken des Anschlusselements 530 auf den Zapfen 540a des mit dem Rohr 512 verbundenen Element 540 in Öffnungen 530f des Anschlusselements 530 einführt. Die Öffnungen 530f sind dabei derart positioniert, dass die Stifte 554 teilweise in Umfangsnuten 540a1 des Zapfens 540a eingreifen. Eine obere Ringfläche 554a jedes der Stifte 554 wirkt mit einer Gegenringfläche 540a2 der Umfangsnuten 540a1 zusammen, wobei letztere die Ringschulter im Sinne der vorliegenden Erfindung bildet.

Obgleich Figur 8 die einzige ist, bei der eine Mehrzahl von in Achsrichtung A voneinander beabstandeten Eingriffselementen, nämlich die Stifte 554, vorgesehen ist, sei an dieser Stelle betont, dass diese Weiterbildung auch bei allen anderen Figuren 3 bis 7 vorgesehen werden kann, und dass auch bei Figur 8 nur eine einzige Ebene von Stiften vorgesehen sein kann.

## Patentansprüche

1. Längenveränderbares Aggregat (10; 10'), umfassend
ein rohrförmiges äußeres Bauteil (12; 12') mit einer Längsachse (A),
ein in dem äußeren Bauteil (12; 12') entlang dessen Längsachse (A) verschiebbar geführtes inneres Bauteil (14; 14'), das an einem Austrittsende (12a; 12a') des äußeren Bauteils (12; 12') aus diesem heraustritt und an seinem außerhalb des äußeren Bauteils (12; 12') angeordneten Ende (14a; 14a') ein Anschlußelement (28; 28') aufweist, und
ein weiteres Anschlußelement (30; 30'), das an dem dem Austrittsende (12a; 12a') entgegengesetzten Montageende (12b; 12b') des äußeren Bauteils (12; 12') angeordnet ist,
**dadurch gekennzeichnet, dass** das weitere Anschlußelement (30; 30') wenigstens eine sich in Umfangsrichtung um die Längsachse (A) des äußeren Bauteils (12; 12') über volle 360° erstreckende Ringschulter (30a) aufweist, wobei mit dem Montageende (12b; 12b') des äußeren Bauteils (12; 12') ein Element (40) starr verbunden ist, das einen Gewindebolzen (40a) trägt, wobei auf den Gewindebolzen (40a) ein im Wesentlichen hutförmig ausgebildeter Aufsatz (42) aufschraubbar ist, welcher an seinem oberen Ende (42a) ein als Ringvorsprung ausgebildetes Eingriffselement aufweist, welches mit einer Hutkrempe (42b) des Aufsatzes (42) durch einen Schaftabschnitt (42c) verbunden ist, und das mit der Ringschulter (30a) in Umfangsrichtung (U) gleitverschiebbar in Längsrichtung (A) jedoch formschlüssig in Eingriff steht.

2. Längenveränderbares Aggregat nach Anspruch 1 ,
**dadurch gekennzeichnet, dass** das wenigstens eine Eingriffselement (44) mit dem Aufsatz (42) einstückig ausgebildet ist.

3. Längenveränderbares Aggregat nach Anspruch 1 oder 2,
**dadurch gekennzeichnet, dass** der Ringvorsprung (44) und ein an diesen angrenzender Längenabschnitt des mit dem Ringvorsprung (44) einstückig ausgebildeten, sich in Richtung der Längsachse (A) erstreckenden Schaftabschnitts (42c) in einer korrespondierend ausgebildeten Ausnehmung (30b) des weiteren Anschlusselements (30; 30') aufgenommen sind.

4. Längenveränderbares Aggregat nach Anspruch 3,
**dadurch gekennzeichnet, dass** das weitere Anschlusselement (30; 30') aus Kunststoff gefertigt ist, und die korrespondierend ausgebildete Ausnehmung (30b) durch Einbetten des Ringvorsprungs (44) und des Schaftabschnitts (42c) in das Kunststoffmaterial des weiteren Anschlußelements (30) hergestellt ist, vorzugsweise durch Umspritzen des Ringvorsprungs (44) und des Schaftabschnitts (42c) mit dem Kunststoffmaterial des weiteren Anschlußelements (30).

5. Längenveränderbares Aggregat nach einem der Ansprüche 1 bis 4,
**dadurch gekennzeichnet, dass** es ein Kolben-Zylinder-Aggregat (10') ist, dessen äußeres Bauteil von einem mit Fluid gefüllten Arbeitszylinder (12') gebildet ist, und
dessen inneres Bauteil von einer Kolbenstange (14') gebildet ist, die an ihrem in dem Arbeitszylinder (12') angeordneten Ende (14b') einen Kolben (32') aufweist, weicher den Innenraum des Arbeitszylinders (12') in einen ersten Arbeitsraum (34') und einen zweiten Arbeitsraum (36') unterteilt, und die an dem Austrittsende (12a') des Arbeitszylinders (12') abgedichtet aus diesem herausgeführt ist und an ihrem außerhalb des Arbeitszylinders (12') angeordneten Ende (14a') das eine Anschlußelement (28') aufweist.

6. Längenveränderbares Aggregat nach einem der Ansprüche 1 bis 4,
**dadurch gekennzeichnet, dass** es ein elektromechanisches Antriebsaggregat (10) ist,
dessen äußeres Bauteil von einem Aussenrohr (12) gebildet ist, und dessen inneres Bauteil von einem Innenrohr (14) gebildet ist, wobei in dem von Aussenrohr (12) und Innenrohr (14) umschlossenen Raum eine elektromechanische Stellvorrichtung (20-22-24-26) angeordnet ist, die einenends mit dem Aussenrohr (12) und andernends mit dem Innenrohr (14) verbunden ist.

7. Längenveränderbares Aggregat nach einem der Ansprüche 1 bis 6, **dadurch gekennzeichnet, dass** das eine Anschlußelement (28; 28') oder/und das andere Anschlußelement (30; 30') eine Kugelpfanne umfasst.

## Claims

1. Length-adjustable unit (10; 10'), comprising a tubular outer component (12; 12') having a longitudinal axis (A), an inner component (14; 14') that is displaceably guided in the outer component (12; 12') along the longitudinal axis (A) thereof, emerges from the outer component (12; 12') at an exit end (12a; 12a') thereof and comprises a connecting element (28; 28') at the end (14a; 14a') thereof that is arranged outside of the outer component (12; 12'), and an additional connecting element (30; 30') that is arranged at the assembly end (12b; 12b') of the outer component (12; 12') that is opposite the exit end (12a; 12a'), **characterised in that** the additional connecting element (30; 30') comprises at least one annular shoulder (30a) that extends in the peripheral direction about the longitudinal axis (A) of the outer component (12; 12') over a full 360° angle, an element (40) that supports a stud bolt (40a) being rigidly connected to the assembly end (12b; 12b') of the outer component (12; 12'), a substantially cap-shaped attachment (42) being able to be screwed onto the stud bolt (40a), which attachment comprises on its upper end (42a) an engaging element formed as an annular projection, which engaging element is connected to a cap rim (42b) of the attachment (42) by a shaft portion (42c) and is engaged with the annular shoulder (30a) so as to be slidingly displaceable in the peripheral direction (U) but positively engaged in the longitudinal direction (A).

2. Length-adjustable unit according to claim 1, **characterised in that** the at least one engaging element (44) is formed integrally with the attachment (42).

3. Length-adjustable unit according to either claim 1 or claim 2, **characterised in that** the annular projection (44) and an adjacent longitudinal portion of the shaft portion (42c), which is formed integrally with the annular projection (44) and extends in the direction of the longitudinal axis (A), are accommodated in a correspondingly formed recess (30b) in the additional connecting element (30; 30').

4. Length-adjustable unit according to claim 3, **characterised in that** the additional connecting element (30; 30') is made of plastics material, and the correspondingly formed recess (30b) is produced by embedding the annular projection (44) and the shaft portion (42c) into the plastics material of the additional connecting element (30), preferably by insert moulding the annular projection (44) and the shaft portion (42c) with the plastics material of the additional connecting element (30).

5. Length-adjustable unit according to any of claims 1 to 4, **characterised in that** it is a piston-cylinder unit (10'), the outer component of which is formed by a working cylinder (12') filled with fluid, and the inner component of which is formed by a piston rod (14') that comprises a piston at the end (14b') thereof arranged in the working cylinder (12'), which piston divides the inner space of the working cylinder (12') into a first working space (34') and a second working space (36'), and is guided out of the working cylinder (12') at the exit end (12a') thereof in a sealed state and comprises one connecting element (28') at the end (14a') thereof arranged outside the working cylinder (12').

6. Length-adjustable unit according to any of claims 1 to 4, **characterised in that** it is an electromechanical drive unit (10), the outer component of which is formed by an outer pipe (12), and the inner component of which is formed by an inner pipe (14), an electromechanical actuator (20-22-24-26) being arranged in the space enclosed by the outer pipe (12) and the inner pipe (14), which actuator is connected at one end to the outer pipe (12) and at the other end to the inner pipe (14).

7. Length-adjustable unit according to any of claims 1 to 6, **characterised in that** one connecting element (28; 28') and/or the other connecting element (30; 30') comprises a ball socket.

## Revendications

1. Ensemble à longueur variable (10 ; 10'), comprenant
un composant extérieur (12 ; 12') de forme tubulaire pourvu d'un axe longitudinal (A),
un composant intérieur 14 ; 14') guidé de manière à pouvoir être coulissé dans le composant extérieur (12 ; 12') le long de son axe longitudinal (A), lequel composant intérieur sort du composant extérieur (12 ; 12') au niveau d'une extrémité de sortie (12a ; 12a') de ce dernier et présente un élément de raccordement (28 ; 28') au niveau de son extrémité (14a ; 14a') disposée à l'extérieur du composant extérieur (12 ; 12'), et
un autre élément de raccordement (30 ; 30'), qui est disposé au niveau de l'extrémité de montage (12b ; 12b'), opposée à l'extrémité de sortie (12a ; 12a'), du composant extérieur (12 ; 12'),
**caractérisé en ce que** l'autre élément de raccordement (30 ; 30') présente au moins un épaulement annulaire (30a) s'étendant dans la direction périphérique autour de l'axe longitudinal (A) du composant extérieur (12 ; 12') sur 360°, dans lequel est relié de manière rigide à l'extrémité de montage (12b ; 12b') du composant extérieur (12 ; 12'), un élément (40) qui supporte un boulon fileté (40a), dans lequel un embout (42) réalisé de manière à présenter sensiblement une forme de chapeau peut être vissé sur le boulon fileté (40a), lequel embout présente, au niveau de son extrémité (42a) supérieure, un élément de prise réalisé sous la forme d'une partie annulaire faisant saillie, lequel élément de prise est relié à un rebord de chapeau (42b) de l'embout (42) par une section de tige (42c) et qui est toutefois en prise par complémentarité de forme dans la direction longitudinale (A) avec l'épaulement annulaire (30a) de manière à pouvoir être coulissé dans la direction périphérique (U).

2. Ensemble à longueur variable selon la revendication 1,
**caractérisé en ce que** l'au moins un élément de prise (44) est réalisé d'un seul tenant avec l'embout (42).

3. Ensemble à longueur variable selon la revendication 1 ou 2,
**caractérisé en ce que** la partie annulaire faisant saillie (44) et une section longitudinale jouxtant cette dernière de la section de tige (42c) réalisée d'un seul tenant avec la partie annulaire faisant saillie (44), s'étendant dans la direction de l'axe longitudinal (A) sont logées dans un évidement (30b) réalisé de manière correspondante de l'autre élément de raccordement (30 ; 30').

4. Ensemble à longueur variable selon la revendication 3,
**caractérisé en ce que** l'autre élément de raccordement (30 ; 30') est produit à partir d'une matière plastique et l'évidement (30b) réalisé de manière correspondante est fabriqué par l'incorporation de la partie annulaire faisant saillie (44) et de la section de tige (42c) dans le matériau en plastique de l'autre élément de raccordement (30), de préférence en enrobant par injection du matériau en plastique de l'autre élément de raccordement (30) la partie annulaire faisant saillie (44) et la section de tige (42c).

5. Ensemble à longueur variable selon l'une quelconque des revendications 1 à 4,
**caractérisé en ce qu'**il est un ensemble piston-cylindre (10'),
dont le composant extérieur est formé par un cylindre de travail (12') rempli de fluide, et
dont le composant intérieur est formé par une tige de piston (14'), qui présente, au niveau de son extrémité (14b') disposée dans le cylindre de travail (12'), un piston (32'), qui divise l'espace intérieur du cylindre de travail (12') en un premier espace de travail (34') et en un second espace de travail (36'), et qui est guidée hors du cylindre de travail (12') de manière étanchéifiée au niveau de l'extrémité de sortie (12a') de ce dernier et présente, au niveau de son extrémité (14a') disposée à l'extérieur du cylindre de travail (12'), un élément de raccordement (28').

6. Ensemble à longueur variable selon l'une quelconque des revendications 1 à 4,
**caractérisé en ce qu'**il est un ensemble d'entraînement (10) électromécanique,
dont le composant extérieur est formé par un tube extérieur (12) et
dont le composant intérieur est formé par un tube intérieur (14), dans lequel un dispositif de réglage (20 - 22 - 24 - 26) électromécanique est disposé dans l'espace renfermé par le tube extérieur (12) et le tube intérieur (14), lequel dispositif de réglage est relié du côté d'une extrémité au tube extérieur (12) et du côté de l'autre extrémité au tube intérieur (14).

7. Ensemble à longueur variable selon l'une quelconque des revendications 1 à 6,
**caractérisé en ce qu'**un élément de raccordement (28 ; 28') et/ou l'autre élément de raccordement (30 ; 30') comprennent un coussinet sphérique.
